# FASCICULE DE BREVET EUROPEEN

(11) **EP 2 505 409 B1**
(45) Date de publication et mention de la délivrance du brevet: **17.02.2016**
(21) Numéro de dépôt: 11160859.2
(22) Date de dépôt: 01.04.2011
(51) Int. Cl.: B60K 6/442, B60K 6/387, B60K 6/52, B60K 6/36

(54) **Groupe motopropulseur pour véhicule hybride.**
Antriebsanlage für Hybridfahrzeug
Power train for hybrid vehicle

(43) Date de publication de la demande: 03.10.2012
(73) Titulaire: Green Propulsion S.A., 4031 Liege (BE)
(72) Inventeur: Toussaint, Yves, 4031, LIEGE (BE)
(74) Mandataire: De Groote, Christophe

(56) Documents cités:
- EP-A1- 1 433 641
- WO-A1-2010/064550
- DE-A1-102005 049 992
- DE-A1-102008 002 381
- DE-C1- 4 431 929
- FR-A1- 2 809 058
- US-A- 6 059 059
- US-A1- 2006 113 127
- US-A1- 2006 164 034

## Description

### Domaine technique

L'invention se rapporte à un groupe motopropulseur électro-thermique hybride de type combiné série parallèle pour propulser un véhicule. Selon un premier aspect, l'invention concerne un groupe motopropulseur pour propulser un véhicule hybride et comprenant :
- un moteur thermique apte à propulser le véhicule, ledit moteur thermique comprenant un arbre moteur ;
- une première machine électrique apte à fournir de l'énergie électrique, ladite première machine électrique comprenant un premier stator et un premier rotor, ledit premier stator étant fixe par rapport au moteur thermique;
- une deuxième machine électrique apte à propulser le véhicule et à fournir de l'énergie électrique, ladite deuxième machine électrique comprenant un deuxième stator et un deuxième rotor, ledit deuxième stator étant fixe par rapport au moteur thermique;
- un premier embrayage comprenant une entrée et une sortie;
- un premier arbre de transmission apte à entraîner au moins une première roue du véhicule via un premier différentiel ; où :
- la première machine électrique est apte à fournir de l'énergie électrique à la deuxième machine électrique pour propulser le véhicule ;
- ledit arbre moteur est connecté audit premier rotor avec un rapport de transmission 1/1 ;
- ledit premier rotor est connecté à ladite entrée dudit premier embrayage avec un rapport de transmission 1 /1;
- ladite sortie dudit premier embrayage est connecté audit premier arbre de transmission avec un rapport de transmission 1/1;

Selon un deuxième aspect, l'invention se rapporte à un véhicule.

### Etat de la technique

De tels groupes motopropulseurs, décrits notamment dans les documents GB 2 454 592 et WO 2009/092197, comprennent typiquement un moteur thermique connecté directement à une première machine électrique et une deuxième machine électrique connectée à la première machine électrique par l'intermédiaire d'un embrayage. Le moteur thermique et les deux machines électriques sont connectés à un arbre de transmission qui peut entraîner des roues du véhicule via un différentiel. Une ou les deux machines électriques sont également aptes à fournir de la puissance électrique vers un dispositif de stockage d'énergie électrique, par exemple vers une batterie.

Lorsque l'embrayage est fermé, le mode de propulsion est de type hybride parallèle. Typiquement, ce mode est retenu lorsque le régime du moteur thermique est suffisant et que les sollicitations du conducteur le justifient. Lorsque l'embrayage est ouvert, le mode de propulsion est de type électrique pur ou de type hybride série. Dans le mode électrique pur, la batterie fournit de l'énergie à la deuxième machine électrique qui est la seule à fournir la puissance mécanique aux roues. Dans le mode série, le moteur thermique entraîne la première machine électrique qui fonctionne alors en génératrice et fournit de l'énergie électrique à la deuxième machine électrique et éventuellement à la batterie. La deuxième machine électrique peut alors fournir la puissance mécanique aux roues.

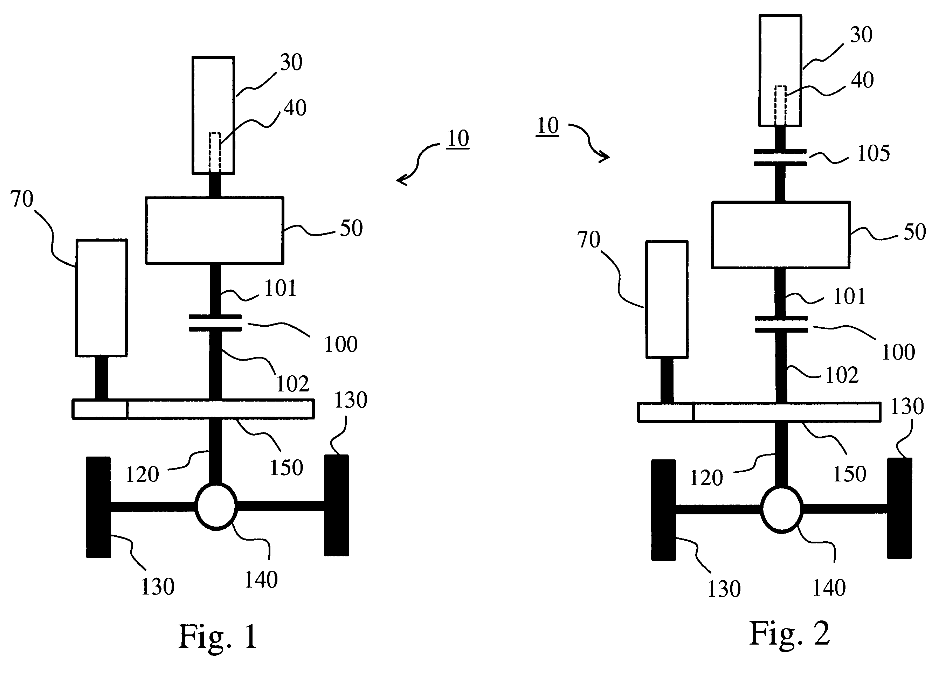

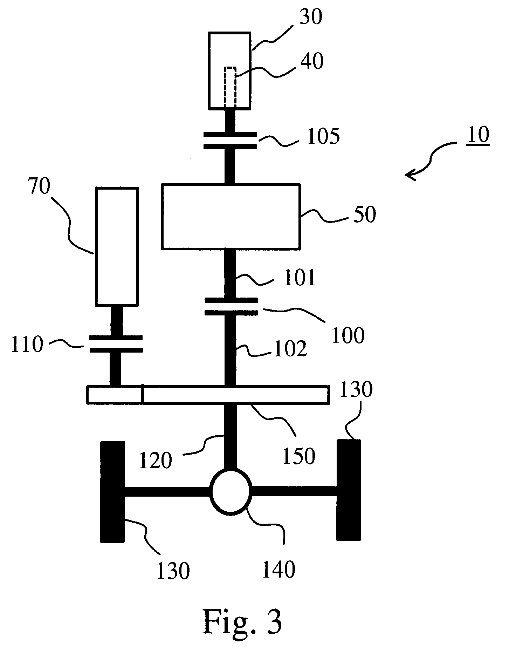

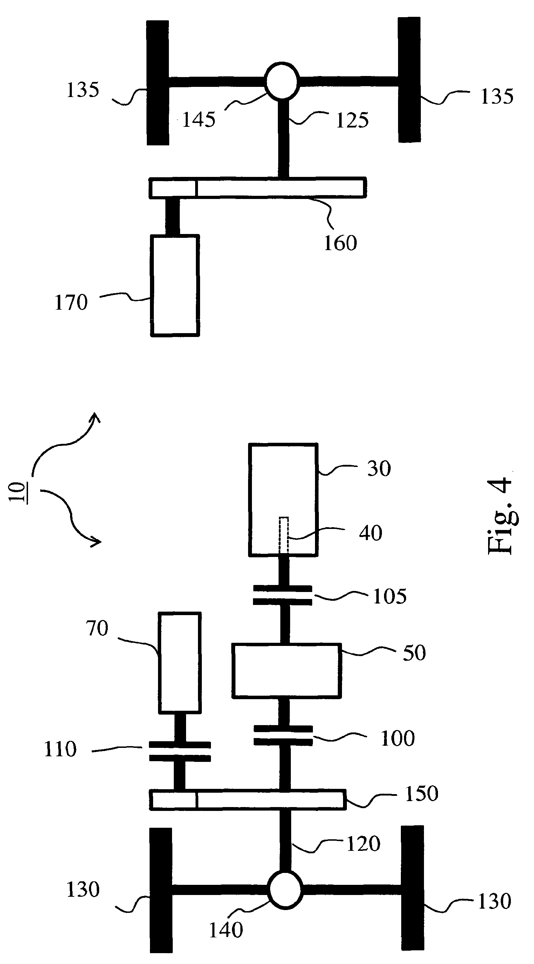

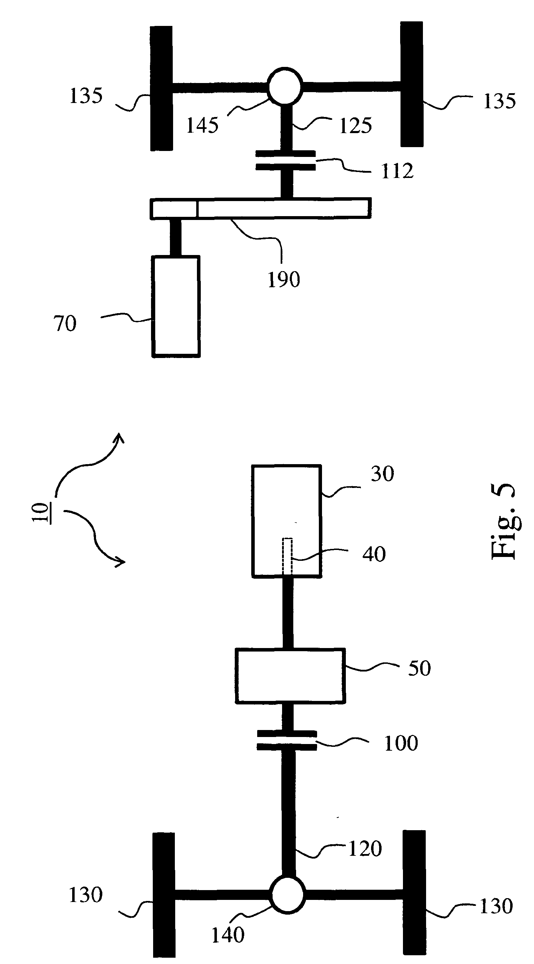

FR2809058 décrit une transmission évolutive pour véhicule hybride. Le groupe motopropulseur de ce document n'est pas de type combiné série parallèle car un mode hybride série n'est pas possible. La notion de mode hybride série est connue de l'homme du métier (voir par exemple p2 de « Introduction to Hybrid Vehicle System Modeling and Control » par Wei Liu, John Wiley & Sons, 2013). Dans un mode hybride série, le moteur thermique ne participe pas directement à la propulsion du véhicule (en d'autres termes, le moteur thermique ne fournit pas de l'énergie mécanique à un arbre de sortie entraînant des roues). Dans un mode hybride série, le moteur thermique entraîne un moteur électrique qui agit comme génératrice pour fournir de l'énergie à un autre moteur électrique qui lui propulse le véhicule. Dans le premier mode d'entraînement du groupe motopropulseur de FR2809058 (figure 2), le moteur thermique T génère de la puissance mécanique à l'arbre de sortie S (via EC1, EC4 et TE1). Dans le deuxième mode d'entraînement du groupe motopropulseur de FR2809058 (figure 3), le moteur thermique T génère de la puissance mécanique à l'arbre de sortie S (via EC1, EC2 et EC3). Dans les troisième et quatrième modes d'entraînement (figures 4 et 5), le moteur thermique T est découplé des première E1 et deuxième E2 machines électriques (EC1 ouvert). A l'arrêt, le moteur thermique peut entraîner le premier moteur électrique E1 qui fonctionne comme génératrice (figure 6). Ce mode ne correspond cependant pas un mode hybride série.

WO2010/064550 A1 décrit un groupe motopropulseur de type combiné série parallèle. Quand on veut profiter de la puissance mécanique du premier moteur électrique (21) de ce groupe motopropulseur, il faut fermer les premier (31) et deuxième (32) embrayages. Dans un tel cas, le moteur thermique (1) est également couplé à l'arbre de sortie (12) (ou arbre de transmission). Ainsi, avec ce groupe motopropulseur, on ne peut pas profiter de la puissance de propulsion du premier moteur électrique (21) sans coupler le moteur thermique (1) à l'arbre de sortie entraînant les roues. En mode électrique pur, seul le deuxième moteur électrique (22) peut participer à la propulsion du véhicule.

Les groupes motopropulseurs tels que décrits dans GB 2 454 592 et WO 2009/092197 nécessitent des machines électriques lourdes qui augmentent le poids du véhicule, ce qui réduit leur efficacité énergétique.

### Résumé de l'invention

Un des buts de la présente invention est de fournir un groupe motopropulseur hybride pour véhicule à un essieu moteur, de type combiné série parallèle, qui présente un poids plus faible par rapport aux systèmes connus ce qui permet de réduire le poids du véhicule dans lequel le groupe motopropulseur est inséré et en conséquence, d'augmenter l'efficacité énergétique du véhicule. A cette fin, selon un premier aspect, le groupe motopropulseur de l'invention est caractérisé en ce que :
- le groupe motopropulseur comprend un premier réducteur ; en ce que
- le deuxième rotor est connecté audit premier arbre de transmission par l'intermédiaire dudit premier réducteur ; et en ce que
- ledit premier réducteur est positionné de manière telle qu'il est apte à imposer une vitesse de rotation du deuxième rotor qui est supérieure à la vitesse de rotation dudit premier arbre de transmission.

Grâce à l'introduction du premier réducteur entre le deuxième rotor de la deuxième machine électrique et le premier arbre de transmission, la vitesse de rotation du deuxième rotor est plus grande que celle du premier arbre de transmission. Ainsi, la vitesse de rotation du deuxième rotor n'est plus limitée par la vitesse de rotation maximale de l'arbre moteur du moteur thermique, souvent de type Diesel, qui est assez lente. Etant donné qu'en régime, la vitesse de rotation du deuxième rotor peut être plus importante pour un groupe motopropulseur tel que celui de l'invention par rapport aux groupes motopropulseurs combinés série parallèle connus, la deuxième machine électrique peut être plus légère pour une même puissance à délivrer. En effet, pour être plus légères, les machines électriques doivent tourner plus rapidement pour une même puissance délivrée. Il s'ensuit que le poids du véhicule dans lequel le groupe motopropulseur de l'invention est inséré est également réduit par rapport à des solutions connues. Au final, l'efficacité énergétique d'un véhicule comprenant un groupe motopropulseur tel que celui de l'invention est accrue. En termes économiques, les spécifications de la deuxième machine électrique de l'invention, plus rapide, correspondent mieux à l'offre principale du marché.

L'invention est caractérisée en ce que le groupe motopropulseur comprend en outre un deuxième embrayage, en ce que la première machine électrique est apte à propulser le véhicule, et en ce que ledit arbre moteur est connecté audit premier rotor par l'intermédiaire dudit deuxième embrayage. Ceci permet d'utiliser la puissance motrice de la première machine en mode électrique pur.

En fermant le premier embrayage et en maintenant le deuxième embrayage ouvert, on peut profiter de la puissance mécanique de la première machine électrique en mode électrique pur. Dans ce mode, le moteur thermique ne participe pas à la propulsion du véhicule. Les deux machines électriques sont alors couplées mécaniquement pour entraîner le véhicule, au profit de performances améliorées ou de l'utilisation de machines électriques moins puissantes et donc plus petites. Dans le second cas, il s'ensuit que le poids du véhicule utilisant un tel groupe motopropulseur peut être réduit.

L'invention est de préférence caractérisée en ce que le groupe motopropulseur comprend en outre un troisième embrayage et en ce que ledit deuxième rotor est connecté audit premier réducteur par l'intermédiaire dudit troisième embrayage. Cette configuration permet d'éviter les surrégimes de la deuxième machine électrique.

Pour diminuer encore plus le poids de la deuxième machine électrique et donc augmenter l'efficacité énergétique du groupe motopropulseur, il y a intérêt à faire tourner le deuxième rotor de la deuxième machine électrique encore plus rapidement et donc de choisir un premier réducteur induisant une vitesse de rotation importante du deuxième rotor par rapport au premier arbre de transmission. Un réducteur présentant un rapport de réduction important permet également d'éviter d'imposer un couple important à basse vitesse à la deuxième machine électrique. Mais un tel réducteur peut conduire à un surrégime de la deuxième machine électrique lorsque le véhicule approche de sa vitesse maximale. Pour éviter ces surrégimes, on peut avantageusement profiter du troisième embrayage et l'ouvrir quand la vitesse du véhicule est importante. De plus, à haute vitesse, cette deuxième machine électrique, lorsqu'elle est désaccouplée, n'introduit plus de pertes pour son entraînement. La première machine électrique peut dans ce cas éventuellement épauler le moteur thermique lors de la propulsion en mode hybride parallèle.

De manière préférée, le groupe motopropulseur de l'invention comprend un quatrième embrayage et le premier réducteur est connecté au premier arbre de transmission par l'intermédiaire du quatrième embrayage.

Selon un deuxième aspect, l'invention se rapporte à un véhicule comprenant un groupe motopropulseur tel que décrit dans les revendications.

### Brève description des dessins

Ces aspects ainsi que d'autres aspects de l'invention seront clarifiés dans la description détaillée de modes de réalisation particuliers de l'invention, référence étant faite aux dessins des figures, dans lesquelles:
- la Fig.1 montre le groupe motopropulseur selon un premier mode de réalisation;
- la Fig.2 montre le groupe motopropulseur de l'invention selon un mode préféré de réalisation;
- la Fig.3 montre le groupe motopropulseur de l'invention selon un mode préféré de réalisation;
- la Fig.4 montre le groupe motopropulseur de l'invention selon un mode préféré de réalisation;
- la Fig.5 montre le groupe motopropulseur de l'invention selon un autre mode de réalisation.

Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

La figure 1 montre schématiquement un groupe motopropulseur 10. Le groupe motopropulseur 10 comprend un moteur thermique 30 qui est apte à propulser un véhicule. Le moteur thermique 30 comprend un arbre moteur 40 qui transfère la puissance du moteur thermique 30 en un couple de rotation. De manière préférée, le moteur thermique 30 est un moteur à combustion interne, de préférence du type moteur Diesel et l'arbre moteur 40 est un vilebrequin permettant la transformation du mouvement linéaire rectiligne non uniforme des pistons du moteur thermique 30 en un mouvement continu de rotation.

Le groupe motopropulseur 10 selon l'invention comprend en outre une première machine électrique 50. Cette première machine électrique 50 est apte à fournir de l'énergie électrique. Dans cette première fonction, la première machine électrique 50 agit donc comme une génératrice. La première machine électrique 50 comprend un premier stator 60 et un premier rotor 65. Le premier stator 60 est fixe par rapport au moteur thermique 30. L'arbre moteur 40 du moteur thermique 30 est connecté à ce premier rotor 65 avec un rapport de transmission 1/1. Ainsi, aucun dispositif de transmission de couple permettant d'avoir une vitesse différente de l'arbre moteur 40 et du premier rotor 65, tel une boîte de vitesse, n'est inséré entre l'arbre moteur 40 et le premier rotor 65.

Le groupe motopropulseur 10 comprend une deuxième machine électrique 70. Cette deuxième machine électrique 70 est apte à propulser un véhicule (fonction d'un moteur électrique) et à fournir de l'énergie électrique. La deuxième machine électrique 70 comprend un deuxième stator 80 et un deuxième rotor 85, ce deuxième stator 80 étant fixe par rapport au moteur thermique 30.

Les deux machines électriques (50,70) sont électriquement connectées à un dispositif d'accumulation d'énergie électrique (non représenté à la figure 1), tels que par exemple des batteries ou des supercondensateurs. Les deux machines électriques (50,70) sont de préférence des machines AC et la connexion électrique se fait de préférence via des convertisseurs de puissance de type onduleurs/redresseurs et un bus DC. Les deux machines électriques (50,70) étant électriquement connectées au même dispositif d'accumulation d'énergie électrique, elles sont également électriquement connectées l'une à l'autre.

Le premier rotor 65 de la première machine électrique 50 est connecté à l'entrée 101 d'un premier embrayage 100 avec un rapport de transmission 1/1. Ainsi, aucun dispositif de transmission de couple permettant d'avoir une vitesse du premier rotor 65 différente de la vitesse de l'entrée 101, tel une boîte de vitesse, n'est inséré entre le premier rotor 65 et l'entrée 101 du premier embrayage 100. La sortie 102 de ce premier embrayage 100 est quant à elle connectée à un premier arbre de transmission 120 qui est apte à entraîner au moins une première roue 130 via un premier différentiel 140. A la figure 1, le premier différentiel 140 est relié à deux roues motrices. La connexion entre la sortie 102 du premier embrayage 100 et le premier arbre de transmission 120 est également caractérisée par un rapport de transmission 1/1.

Le groupe motopropulseur de la figure 1 comprend en outre un premier réducteur 150. Le deuxième rotor 85 de la deuxième machine électrique 70 est connecté au premier arbre de transmission 120 par l'intermédiaire de ce premier réducteur 150 qui induit une vitesse de rotation du deuxième rotor 85 qui est supérieure à la vitesse de rotation du premier arbre de transmission 120 lorsque le véhicule roule.

Un groupe motopropulseur 10 selon l'invention peut fonctionner selon différents modes. Pour ce faire, une unité de contrôle électronique (non représentée à la figure 1) reçoit des informations du moteur thermique 30, des machines électriques (50,70), du dispositif d'accumulation d'énergie électrique, du poste de pilotage et commande chacune des machines motrices ainsi que le premier embrayage 100.

Dans un mode de fonctionnement « électrique pur », le moteur thermique 30 est éteint et l'unité de contrôle électronique ouvre le premier embrayage 100. La deuxième machine électrique 70 est alors la seule à pouvoir propulser le véhicule à partir de l'énergie présente dans le dispositif d'accumulation d'énergie électrique. Ce mode de fonctionnement convient particulièrement bien aux passages dans les centres urbains où les émissions de gaz d'échappement sont mal venues. En cas de freinage, la deuxième machine électrique 70 peut transformer l'énergie de rotation des roues en énergie électrique qui est transférée vers le dispositif d'accumulation d'énergie électrique.

Dans un mode de fonctionnement « hybride série », l'unité de contrôle électronique maintient également le premier embrayage 100 ouvert. Typiquement, la première machine électrique 50 démarre le moteur thermique 30 puis est entraînée par ce dernier pour générer de l'énergie électrique. Cette énergie électrique peut être transférée vers la deuxième machine électrique 70 et vers le dispositif d'accumulation d'énergie électrique. Dans ce mode, c'est la deuxième machine électrique 70 qui génère la puissance mécanique vers l'au moins une première roue 130. Le mode de fonctionnement « hybride série » est privilégié pour des vitesses moyennes faibles du véhicule et pour des arrêts fréquents de ce dernier.

Lors d'un mode de fonctionnement « hybride parallèle », l'unité de contrôle électronique ferme le premier embrayage 100. Le moteur thermique 30 entraîne alors le véhicule de pair avec la deuxième 70 machine électrique qui est alimentée en énergie électrique par le dispositif d'accumulation d'énergie électrique. De préférence, la première machine électrique 50 participe également à la propulsion du véhicule dans ce mode. Un tel mode hybride parallèle offre un bon rendement d'ensemble pour des vitesses moyennes plus élevées du véhicule, par exemple en zone périurbaine.

De manière préférée, toute transition du mode « électrique pur » vers le mode « hybride parallèle » et la réciproque passe par le mode « hybride série ».

Le groupe motopropulseur 10 tel que décrit ci-dessus permet de propulser un véhicule, préférentiellement un véhicule utilitaire. L'invention s'adresse préférentiellement à des groupes motopropulseurs 10 ayant une implantation longitudinale dans le véhicule. De préférence, le rapport de réduction imposé par le premier réducteur 190 sera choisi de manière telle que le gain de poids de la deuxième machine électrique 70 (tournant plus vite) est supérieur au poids de ce premier réducteur 190. De manière préférée, la deuxième machine électrique 70 a une vitesse de rotation maximale de 12 000 tours par minute et le premier réducteur 150 est apte à induire une vitesse de rotation du deuxième rotor 85 de la deuxième machine électrique 70 qui est 2,5 fois supérieure à la vitesse de rotation du premier arbre de transmission 120.

La figure 2 montre un groupe motopropulseur 10 selon l'invention. Dans ce mode de réalisation, l'arbre moteur 40 du moteur thermique 30 est connecté au premier rotor 65 de la première machine électrique 50 par l'intermédiaire d'un deuxième embrayage 105. En mode électrique pur, il est alors possible d'utiliser la force motrice de la première machine électrique 50 pour propulser le véhicule en ouvrant ce deuxième embrayage 105 et en fermant le premier embrayage 100. Lors du freinage du véhicule, la première machine électrique 50 peut également, en plus de la deuxième machine électrique 70, convertir l'énergie rotative de l'au moins une première roue 130 connectée au premier différentiel 140 en énergie électrique qui peut ensuite être transférée vers le dispositif d'accumulation d'énergie électrique.

La figure 3 montre un groupe motopropulseur 10 selon un mode plus préféré de réalisation de l'invention. Dans ce mode de réalisation, le deuxième rotor 85 de la deuxième machine électrique 70 est connecté au premier réducteur 150 par l'intermédiaire d'un troisième embrayage 110. Typiquement, l'unité de contrôle électronique ouvre ce troisième embrayage 110 lorsque le véhicule approche de sa vitesse maximale. Ainsi, les risques de surrégime de la deuxième machine électrique 70 sont éliminés. Quand le troisième embrayage 110 est ouvert, la première machine électrique 50 épaule de préférence le moteur thermique 30 en mode « hybride parallèle ».

Dans un mode encore plus préféré de réalisation (non représenté dans les figures), un quatrième embrayage 112 est connecté entre le premier réducteur 150 et le premier arbre de transmission 120. Ce quatrième embrayage 112 peut remplacer le troisième embrayage 110. Dans d'autres modes de réalisation de l'invention, le groupe motopropulseur 10 comprend le premier 100 et le troisième 110 embrayage (sans le deuxième 105 et le quatrième 112 embrayage) ou le premier 100 et le quatrième embrayage 112 (sans le deuxième 105 et le troisième 110 embrayage).

Un groupe motopropulseur 10 selon un autre mode de réalisation de l'invention est adapté aux véhicules avec deux essieux moteurs. Dans ce mode de réalisation, représenté à la figure 4, le groupe motopropulseur 10 comprend une troisième machine électrique 170 apte à propulser le véhicule et apte à fournir de l'énergie électrique. Cette troisième machine électrique 170 comprend un troisième stator 180 et un troisième rotor 185, le troisième stator 180 étant fixe par rapport au moteur thermique 30. Dans ce mode de réalisation, le groupe motopropulseur 10 comprend également un deuxième réducteur 160 et un deuxième arbre de transmission 125 apte à entraîner au moins une deuxième roue 135 du véhicule via un deuxième différentiel 145. Le troisième rotor 185 de la troisième machine électrique 170 est connecté au deuxième arbre de transmission 125 par l'intermédiaire du deuxième réducteur 160 qui impose une vitesse de rotation du troisième rotor 185 qui est supérieure à la vitesse de rotation du deuxième arbre de transmission 125 quand le véhicule roule.

De manière préférée, ce groupe motopropulseur 10 comprend un cinquième embrayage 115 tel que le troisième rotor 185 est connecté au deuxième réducteur 160 par l'intermédiaire de ce cinquième embrayage 115. Dans un autre mode de réalisation, le deuxième réducteur 160 est connecté au deuxième arbre de transmission 125 par l'intermédiaire d'un sixième embrayage 117.

Le groupe motopropulseur 10 de l'invention pour deux essieux moteurs inclut le premier embrayage 100 décrit plus haut. De manière préférée, il comprend également le deuxième 105 et/ou le troisième 110 et/ou le quatrième 112 embrayage dont les emplacements et fonctions ont été décrits dans les modes de réalisation précédents.

De manière préférée, une quatrième machine électrique 210 comprenant un quatrième stator 220 et un quatrième rotor 225 est connectée, de paire avec la deuxième machine électrique 70, au premier arbre de transmission 120 par l'intermédiaire du premier réducteur 150. Ainsi, l'effort de transmission uniquement supporté par la seule deuxième machine électrique 70 dans les autres modes de réalisation est également fourni par cette quatrième machine électrique 210. Dans ce mode de réalisation, les deux machines électriques, 70 et 210, ont typiquement leur axe de symétrie parallèle et agissent typiquement sur deux entrées distinctes du premier réducteur 150. Le premier réducteur 150 est apte à imposer une vitesse de rotation du quatrième rotor 225 qui est supérieure à la vitesse de rotation du premier arbre de transmission 120.

La figure 5 montre un groupe motopropulseur 10 selon un autre mode de réalisation de l'invention. Ce groupe motopropulseur 10 comprend les éléments suivants. Un moteur thermique 30 apte à propulser un véhicule comprend un arbre moteur 40. Une première 50 (respectivement deuxième 70) machine électrique apte à fournir de l'énergie électrique et à propulser un véhicule comprend un premier 65 (respectivement deuxième 85) rotor et un premier 60 (respectivement deuxième 80) stator, le première 60 (respectivement deuxième 80) stator étant fixe par rapport au moteur thermique 30. L'arbre moteur 40 du moteur thermique 30 est connecté au premier rotor 65 avec un rapport de transmission 1/1. Un dispositif d'accumulation d'énergie électrique (non représenté à la figure 5) est électriquement connecté à la première 50 et à la deuxième 70 machine électrique qui sont donc électriquement connectées l'une à l'autre. Un premier embrayage 100 comprend une entrée 101 et une sortie 102. Le premier rotor 60 est connecté à cette entrée 101 avec un rapport de transmission 1/1. Un premier 120

(respectivement deuxième 125) arbre de transmission est apte à entraîner au moins une première 130 (respectivement deuxième 135) roue via un premier 140 (respectivement deuxième 145) différentiel. La sortie 102 du premier embrayage 100 est connecté au premier arbre de transmission 120 avec un rapport de transmission 1/1. Le deuxième rotor 85 de la deuxième machine électrique 70 est connecté au deuxième arbre de transmission 125 par l'intermédiaire d'un réducteur 190. Ce réducteur 190 est positionné de manière telle qu'il est apte à imposer un vitesse de rotation du deuxième rotor 85 qui est supérieure à la vitesse de rotation du deuxième arbre de transmission 125. L'embrayage 112 représenté à la figure 5 est optionnel.

Selon l'invention, un groupe motopropulseur 10 tel qu'illustré à la figure 5 comprend en outre un deuxième embrayage 105 et l'arbre moteur 40 est connecté au premier rotor 65 par l'intermédiaire de ce deuxième embrayage 105.

Dans un mode préféré de réalisation de l'invention, un groupe motopropulseur 10 tel que décrit par la figure 5 comprend en outre un troisième embrayage 110 et le deuxième rotor 85 est connecté au réducteur 190 par l'intermédiaire du troisième embrayage 110.

Dans un mode préféré de réalisation de l'invention, un groupe motopropulseur 10 tel que décrit par la figure 5 comprend le quatrième embrayage 112 présent sur cette figure et le réducteur 190 est connecté au deuxième arbre de transmission 125 par l'intermédiaire de ce quatrième embrayage 112.

De manière préférée, le groupe motopropulseur 10 tel que décrit à la figure 5 comprend à la fois le deuxième 105, troisième 110 et/ou quatrième 112 embrayage.

Dans tous les modes de réalisation décrits ci-dessus, tout type d'embrayage peut être envisagé. De manière plus générale, le mot embrayage doit être compris comme signifiant tout dispositif d'accouplement assurant un rapport de transmission 1/1. Un rapport de transmission 1/1 signifie que les vitesses de rotation de l'entrée 101 et de la sortie 102 d'un tel dispositif sont égales quand le dispositif d'accouplement (ou embrayage) est fermé et en-dehors des phénomènes transitoires. Durant de tels phénomènes, la vitesse de rotation de l'entrée 101 peut être légèrement différente de celle de la sortie 102 pendant un temps assez court. A titre d'exemple, l'homme du métier peut utiliser un embrayage de type roue libre, un embrayage de type mono-disque ou multi-disque, un embrayage électromagnétique. Le premier 100, deuxième 105, troisième 110, quatrième 115, cinquième 115 et sixième 117 embrayage peuvent être identiques ou différents.

De même, le premier 150 et deuxième 160 réducteur peuvent être identiques ou différents. Ils doivent cependant être configurés et positionnés de manière telle à imposer une vitesse de rotation du rotor auquel ils sont reliés d'un côté qui est supérieure à la vitesse de rotation de l'arbre de transmission qui est connecté à leur autre côté. Ainsi, si la vitesse de rotation de l'arbre de transmission connecté à un côté du réducteur vaut 1, la vitesse de rotation du rotor connecté à l'autre côté du réducteur vaut n, avec n>1. De manière préférée, n est compris entre 2,5 et 4. Deux exemples d'engrenages sont : courroies et systèmes poulies.

Selon un autre aspect, l'invention concerne un véhicule comprenant un groupe motopropulseur 10 tel que décrit précédemment.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. En particulier, l'invention concerne également les combinaisons des caractéristiques techniques des modes de réalisation énoncés plus haut. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

En résumé, l'invention peut également être décrite comme suit. Groupe motopropulseur 10 pour véhicule hybride. Le groupe motopropulseur 10 comprend un moteur thermique 30, une première 50 et une deuxième 70 machine électrique et un premier embrayage 100. L'arbre moteur 40 du moteur thermique 30 est connecté au rotor de la première machine électrique 50 qui lui-même est relié au premier embrayage 100, ce dernier étant connecté à un arbre de transmission 120 apte à entraîner des roues 130 via un différentiel 140. Le rotor de la deuxième machine électrique 70 est connecté à l'arbre de transmission 120 par l'intermédiaire d'un réducteur 150.

## Revendications

1. Groupe motopropulseur (10) hybride de type combiné série parallèle pour propulser un véhicule et comprenant :
- un moteur thermique (30) apte à propulser le véhicule, ledit moteur thermique (30) comprenant un arbre moteur (40);
- une première machine électrique (50) apte à fournir de l'énergie électrique, ladite première machine électrique (50) comprenant un premier stator (60) et un premier rotor (65), ledit premier stator (60) étant fixe par rapport au moteur thermique (30);
- une deuxième machine électrique (70) apte à propulser le véhicule et à fournir de l'énergie électrique, ladite deuxième machine électrique (70) comprenant un deuxième stator (80) et un deuxième rotor (85), ledit deuxième stator (80) étant fixe par rapport au moteur thermique (30);
- un premier embrayage (100) comprenant une entrée (101) et une sortie (102);
- un premier arbre de transmission (120) apte à entraîner au moins une première roue (130) du véhicule via un premier différentiel (140);
- un premier réducteur (150);
où :
- la première machine électrique (50) est apte à fournir de l'énergie électrique à la deuxième machine électrique (70) pour propulser le véhicule ;
- ledit arbre moteur (40) est connecté audit premier rotor (65) avec un rapport de transmission 1/1 ;
- ledit premier rotor (65) est connecté de manière permanente à ladite entrée (101) dudit premier embrayage (100) avec un rapport de transmission 1/1;
- ladite sortie (102) dudit premier embrayage (100) est connectée audit premier arbre de transmission (120) avec un rapport de transmission 1/1;
- le deuxième rotor (85) est connecté audit premier arbre de transmission (120) par l'intermédiaire dudit premier réducteur (150);
- ledit premier réducteur (150) est positionné de manière telle qu'il est apte à imposer une vitesse de rotation du deuxième rotor (85) qui est supérieure à la vitesse de rotation dudit premier arbre de transmission (120) ;
**caractérisé en ce que**
le groupe motopropulseur (10) comprend en outre un deuxième embrayage (105), **en ce que**
la première machine électrique (50) est apte à propulser le véhicule, et **en ce que**
ledit arbre moteur (40) est connecté audit premier rotor (65) par l'intermédiaire dudit deuxième embrayage (105).

2. Groupe motopropulseur (10) selon la revendication 1 **caractérisé en ce que** le groupe motopropulseur (10) comprend en outre un troisième embrayage (110) et **en ce que** ledit deuxième rotor (85) est connecté audit premier réducteur (150) par l'intermédiaire dudit troisième embrayage (110).

3. Groupe motopropulseur (10) selon l'une quelconque des revendications précédentes **caractérisé en ce que** le groupe motopropulseur (10) comprend en outre un quatrième embrayage (112) et **en ce que** le premier réducteur (150) est connecté au premier arbre de transmission (120) par l'intermédiaire dudit quatrième embrayage (112).

4. Groupe motopropulseur (10) selon l'une quelconque des revendications précédentes **caractérisé en ce que** le groupe motopropulseur (10) comprend en outre :
- une troisième machine électrique (170) apte à propulser le véhicule et comprenant un troisième stator (180) et un troisième rotor (185), le troisième stator (180) étant fixe par rapport au moteur thermique (30);
- un deuxième réducteur (160);
- un deuxième arbre de transmission (125) apte à entraîner au moins une deuxième roue (135) du véhicule via un deuxième différentiel (145);
et **en ce que**
- ledit troisième rotor (185) est connecté audit deuxième arbre de transmission (125) par l'intermédiaire dudit deuxième réducteur (160);
- ledit deuxième réducteur (160) est positionné de manière telle qu'il est apte à imposer une vitesse de rotation du troisième rotor (185) qui est supérieure à la vitesse de rotation du deuxième arbre de transmission (125).

5. Groupe motopropulseur (10) selon la revendication 4 **caractérisé en ce que** le groupe motopropulseur (10) comprend un cinquième embrayage (115) et **en ce que** ledit troisième rotor (185) est connecté audit deuxième réducteur (160) par l'intermédiaire dudit cinquième embrayage (115).

6. Groupe motopropulseur (10) selon la revendication 4 ou 5 **caractérisé en ce que** le groupe motopropulseur (10) comprend un sixième embrayage (117) et **en ce que** ledit deuxième réducteur (160) est connecté audit deuxième arbre de transmission (125) par l'intermédiaire dudit sixième embrayage (117).

7. Groupe motopropulseur (10) selon l'une quelconque des revendications précédentes **caractérisé en ce que** le groupe motopropulseur (10) comprend une quatrième machine électrique (210) comprenant un quatrième stator (220) et un quatrième rotor (225), **en ce que** ladite quatrième machine électrique (210) est connectée audit premier arbre de transmission (120) par l'intermédiaire dudit premier réducteur (150) et **en ce que** ledit premier réducteur (150) est positionné de manière telle qu'il est apte à imposer une vitesse de rotation du quatrième rotor (225) qui est supérieure à la vitesse de rotation dudit premier arbre de transmission (120).

8. Groupe motopropulseur (10) hybride de type combiné série parallèle pour propulser un véhicule et comprenant :
- un moteur thermique (30) apte à propulser le véhicule, ledit moteur thermique (30) comprenant un arbre moteur (40);
- une première machine électrique (50) apte à fournir de l'énergie électrique, ladite première machine électrique (50) comprenant un premier stator (60) et un premier rotor (65), ledit premier stator (60) étant fixe par rapport au moteur thermique (30);
- une deuxième machine électrique (70) apte à propulser le véhicule et à fournir de l'énergie électrique, ladite deuxième machine électrique (70) comprenant un deuxième stator (80) et un deuxième rotor (85), ledit deuxième stator (80) étant fixe par rapport au moteur thermique (30);
- un premier embrayage (100) comprenant une entrée (101) et une sortie (102);
- un premier arbre de transmission (120) apte à entraîner au moins une première roue (130) du véhicule via un premier différentiel (140);
- un deuxième arbre de transmission (125) apte à entraîner au moins une deuxième roue (135) du véhicule via un deuxième différentiel (145);
- un réducteur (190);
où :
- la première machine électrique (50) est apte à fournir de l'énergie électrique à la deuxième machine électrique (70) pour propulser le véhicule ;
- ledit arbre moteur (40) est connecté audit premier rotor (65) avec un rapport de transmission 1/1 ;
- ledit premier rotor (65) est connecté de manière permanente à ladite entrée (101) dudit premier embrayage (100) avec un rapport de transmission 1/1 ;
- ladite sortie (102) dudit premier embrayage (100) est connectée audit premier arbre de transmission (120) avec un rapport de transmission 1/1 ;
- le deuxième rotor (85) est connecté audit deuxième arbre de transmission (125) par l'intermédiaire dudit réducteur (190) ;
- ledit réducteur (190) est positionné de manière telle qu'il est apte à imposer une vitesse de rotation du deuxième rotor (85) qui est supérieure à la vitesse de rotation du deuxième arbre de transmission (125) ;
**caractérisé en ce que**
le groupe motopropulseur (10) comprend en outre un deuxième embrayage (105), et **en ce que**
ledit arbre moteur (40) est connecté audit premier rotor (65) par l'intermédiaire dudit deuxième embrayage (105).

9. Groupe motopropulseur (10) selon la revendication 8 **caractérisé en ce que** le groupe motopropulseur (10) comprend en outre un troisième embrayage (110) et **en ce que** ledit deuxième rotor (85) est connecté audit réducteur (190) par l'intermédiaire dudit troisième embrayage (110).

10. Groupe motopropulseur (10) selon l'une quelconque des revendications 8 à 9 **caractérisé en ce que** le groupe motopropulseur (10) comprend en outre un quatrième embrayage (112) et **en ce que** ledit réducteur (190) est connecté audit deuxième arbre de transmission (125) par l'intermédiaire dudit quatrième embrayage (112).

11. Groupe motopropulseur (10) selon l'une quelconque des revendications 8 à 10 **caractérisé en ce que** le groupe motopropulseur (10) comprend une quatrième machine électrique (210) comprenant un quatrième stator (220) et un quatrième rotor (225), **en ce que** ladite quatrième machine électrique (210) est connectée audit deuxième arbre de transmission (125) par l'intermédiaire dudit réducteur (190) et **en ce que** ledit réducteur (190) est positionné de manière telle qu'il est apte à imposer une vitesse de rotation du quatrième rotor (225) qui est supérieure à la vitesse de rotation dudit deuxième arbre de transmission (125).

12. Véhicule comprenant un groupe motopropulseur (10) selon l'une quelconque des revendications précédentes.

## Patentansprüche

1. Hybrider Antriebsstrang (10) vom kombiniert seriell-parallelen Typ für den Antrieb eines Fahrzeugs und der enthält:
- einen Verbrennungsmotor (30), der das Fahrzeug antreiben kann, wobei der Verbrennungsmotor (30) eine Antriebswelle (40) enthält;
- eine erste elektrische Maschine (50), die elektrische Energie liefern kann, wobei die erste elektrische Maschine (50) einen ersten Stator (60) und einen ersten Rotor (65) enthält, wobei der erste Stator (60) bezüglich des Verbrennungsmotors (30) ortsfest ist;
- eine zweite elektrische Maschine (70), die das Fahrzeug antreiben und elektrische Energie liefern kann, wobei die zweite elektrische Maschine (70) einen zweiten Stator (80) und einen zweiten Rotor (85) enthält, wobei der zweite Stator (80) bezüglich des Verbrennungsmotors (30) ortsfest ist;
- eine erste Kupplung (100), die einen Eingang (101) und einen Ausgang (102) enthält;
- eine erste Gelenkwelle (120), die mindestens ein erstes Rad (130) des Fahrzeugs über ein erstes Differential (140) antreiben kann;
- ein erstes Untersetzungsgetriebe (150);
wobei:
- die erste elektrische Maschine (50) elektrische Energie an die zweite elektrische Maschine (70) liefern kann, um das Fahrzeug anzutreiben;
- die Antriebswelle (40) mit dem ersten Rotor (65) mit einem Übersetzungsverhältnis 1/1 verbunden ist;
- der erste Rotor (65) dauerhaft mit dem Eingang (101) der ersten Kupplung (100) mit einem Übersetzungsverhältnis 1/1 verbunden ist;
- der Ausgang (102) der ersten Kupplung (100) mit der ersten Gelenkwelle (120) mit einem Übersetzungsverhältnis 1/1 verbunden ist;
- der zweite Rotor (85) mittels des ersten Untersetzungsgetriebes (150) mit der ersten Gelenkwelle (120) verbunden ist;
- das erste Untersetzungsgetriebe (150) so positioniert ist, dass es eine Drehgeschwindigkeit des zweiten Rotors (85) vorgeben kann, die höher ist als die Drehgeschwindigkeit der ersten Gelenkwelle (120);
**dadurch gekennzeichnet,**
**dass** der Antriebsstrang (10) außerdem eine zweite Kupplung (105) enthält,
**dass** die erste elektrische Maschine (50) das Fahrzeug antreiben kann, und
**dass** die Antriebswelle (40) mittels der zweiten Kupplung (105) mit dem ersten Rotor (65) verbunden ist.

2. Antriebsstrang (10) nach Anspruch 1, **dadurch gekennzeichnet, dass** der Antriebsstrang (10) außerdem eine dritte Kupplung (110) enthält, und dass der zweite Rotor (85) mittels der dritten Kupplung (110) mit dem ersten Untersetzungsgetriebe (150) verbunden ist.

3. Antriebsstrang (10) nach einem der vorhergehenden Ansprüche, **dadurch gekennzeichnet, dass** der Antriebsstrang (10) außerdem eine vierte Kupplung (112) enthält, und dass das erste Untersetzungsgetriebe (150) mittels der vierten Kupplung (112) mit der ersten Gelenkwelle (120) verbunden ist.

4. Antriebsstrang (10) nach einem der vorhergehenden Ansprüche, **dadurch gekennzeichnet, dass** der Antriebsstrang (10) außerdem enthält:
- eine dritte elektrische Maschine (170), die das Fahrzeug antreiben kann und einen dritten Stator (180) und einen dritten Rotor (185) enthält, wobei der dritte Stator (180) bezüglich des Verbrennungsmotors (30) ortsfest ist;
- ein zweites Untersetzungsgetriebe (160);
- eine zweite Gelenkwelle (125), die mindestens ein zweites Rad (135) des Fahrzeugs über ein zweites Differential (145) antreiben kann;
und dass
- der dritte Rotor (185) mittels des zweiten Untersetzungsgetriebes (160) mit der zweiten Gelenkwelle (125) verbunden ist;
- das zweite Untersetzungsgetriebe (160) so positioniert ist, dass es eine Drehgeschwindigkeit des dritten Rotors (185) vorgeben kann, die höher ist als die Drehgeschwindigkeit der zweiten Gelenkwelle (125).

5. Antriebsstrang (10) nach Anspruch 4, **dadurch gekennzeichnet, dass** der Antriebsstrang (10) eine fünfte Kupplung (115) enthält, und dass der dritte Rotor (185) mittels der fünften Kupplung (115) mit dem zweiten Untersetzungsgetriebe (160) verbunden ist.

6. Antriebsstrang (10) nach Anspruch 4 oder 5, **dadurch gekennzeichnet, dass** der Antriebsstrang (10) eine sechste Kupplung (117) enthält, und dass das zweite Untersetzungsgetriebe (160) mittels der sechsten Kupplung (117) mit der zweiten Gelenkwelle (125) verbunden ist.

7. Antriebsstrang (10) nach einem der vorhergehenden Ansprüche, **dadurch gekennzeichnet, dass** der Antriebsstrang (10) eine vierte elektrische Maschine (210) enthält, die einen vierten Stator (220) und einen vierten Rotor (225) enthält, dass die vierte elektrische Maschine (210) mittels des ersten Untersetzungsgetriebes (150) mit der ersten Gelenkwelle (120) verbunden ist, und dass das erste Untersetzungsgetriebe (150) so positioniert ist, dass es eine Drehgeschwindigkeit des vierten Rotors (225) vorgeben kann, die höher ist als die Drehgeschwindigkeit der ersten Gelenkwelle (120).

8. Hybrider Antriebsstrang (10) vom kombiniert seriell-parallelen Typ für den Antrieb eines Fahrzeugs und der enthält:
- einen Verbrennungsmotor (30), der das Fahrzeug antreiben kann, wobei der Verbrennungsmotor (30) eine Antriebswelle (40) enthält;
- eine erste elektrische Maschine (50), die elektrische Energie liefern kann, wobei die erste elektrische Maschine (50) einen ersten Stator (60) und einen ersten Rotor (65) enthält, wobei der erste Stator (60) bezüglich des Verbrennungsmotors (30) ortsfest ist;
- eine zweite elektrische Maschine (70), die das Fahrzeug antreiben und elektrische Energie liefern kann, wobei die zweite elektrische Maschine (70) einen zweiten Stator (80) und einen zweiten Rotor (85) enthält, wobei der zweite Stator (80) bezüglich des Verbrennungsmotors (30) ortsfest ist;
- eine erste Kupplung (100), die einen Eingang (101) und einen Ausgang (102) enthält;
- eine erste Gelenkwelle (120), die mindestens ein erstes Rad (130) des Fahrzeugs über ein erstes Differential (140) antreiben kann;
- eine zweite Gelenkwelle (125), die mindestens ein zweites Rad (135) des Fahrzeugs über ein zweites Differential (145) antreiben kann;
- ein Untersetzungsgetriebe (190);
wobei:
- die erste elektrische Maschine (50) elektrische Energie an die zweite elektrische Maschine (70) liefern kann, um das Fahrzeug anzutreiben;
- die Antriebswelle (40) mit dem ersten Rotor (65) mit einem Übersetzungsverhältnis 1/1 verbunden ist;
- der erste Rotor (65) dauerhaft mit dem Eingang (101) der ersten Kupplung (100) mit einem Übersetzungsverhältnis 1/1 verbunden ist;
- der Ausgang (102) der ersten Kupplung (100) mit der ersten Gelenkwelle (120) mit einem Übersetzungsverhältnis 1/1 verbunden ist;
- der zweite Rotor (85) mittels des Untersetzungsgetriebes (190) mit der zweiten Gelenkwelle (125) verbunden ist;
- das Untersetzungsgetriebe (190) so positioniert ist, dass es eine Drehgeschwindigkeit des zweiten Rotors (85) vorgeben kann, die höher ist als die Drehgeschwindigkeit der zweiten Gelenkwelle (125);
**dadurch gekennzeichnet,**
**dass** der Antriebsstrang (10) außerdem eine zweite Kupplung (105) enthält, und
**dass** die Antriebswelle (40) mittels der zweiten Kupplung (105) mit dem ersten Rotor (65) verbunden ist.

9. Antriebsstrang (10) nach Anspruch 8, **dadurch gekennzeichnet, dass** der Antriebsstrang (10) außerdem eine dritte Kupplung (110) enthält, und dass der zweite Rotor (85) mittels der dritten Kupplung (110) mit dem Untersetzungsgetriebe (190) verbunden ist.

10. Antriebsstrang (10) nach einem der Ansprüche 8 bis 9, **dadurch gekennzeichnet, dass** der Antriebsstrang (10) außerdem eine vierte Kupplung (112) enthält, und dass das Untersetzungsgetriebe (190) mittels der vierten Kupplung (112) mit der zweiten Gelenkwelle (125) verbunden ist.

11. Antriebsstrang (10) nach einem der Ansprüche 8 bis 10, **dadurch gekennzeichnet, dass** der Antriebsstrang (10) eine vierte elektrische Maschine (210) enthält, die einen vierten Stator (220) und einen vierten Rotor (225) enthält, dass die vierte elektrische Maschine (210) mittels des Untersetzungsgetriebes (190) mit der zweiten Gelenkwelle (125) verbunden ist, und dass das Untersetzungsgetriebe (190) so positioniert ist, dass es eine Drehgeschwindigkeit des vierten Rotors (225) vorgeben kann, die höher ist als die Drehgeschwindigkeit der zweiten Gelenkwelle (125).

12. Fahrzeug, das einen Antriebsstrang (10) nach einem der vorhergehenden Ansprüche enthält.

## Claims

1. Hybrid powertrain (10), of combined series-parallel type for propelling a vehicle and comprising:
- a combustion engine (30) suitable for propelling the vehicle, said combustion engine (30) comprising a drive shaft (40);
- a first electrical machine (50) suitable for generating electrical energy, said first electrical machine (50) comprising a first stator (60) and a first rotor (65), said first stator (60) being fixed relative to the combustion engine (30);
- a second electrical machine (70) suitable for propelling the vehicle and for generating electrical energy, said second electrical machine (70) comprising a second stator (80) and a second rotor (85), said second stator (80) being fixed relative to the combustion engine (30);
- a first clutch (100) comprising an input (101) and an output (102);
- a first transmission shaft (120) suitable for driving at least one first wheel (130) of the vehicle via a first differential (140);
- a first reducing gear (150);
in which:
- the first electrical machine (50) is suitable for supplying electrical energy to the second electrical machine (70) to propel the vehicle;
- said drive shaft (40) is connected to said first rotor (65) with a 1/1 transmission ratio;
- said first rotor (65) is permanently connected to said input (101) of said first clutch (100) with a 1/1 transmission ratio;
- said output (102) of said first clutch (100) is connected to said first transmission shaft (120) with a 1/1 transmission ratio;
- the second rotor (85) is connected to said first transmission shaft (120) via said first reducing gear (150);
- said first reducing gear (150) is positioned in such a way that it is suitable for imposing a speed of rotation of the second rotor (85) which is greater than the speed of rotation of said first transmission shaft (120);
**characterized in that**
the powertrain (10) further comprises a second clutch (105), **in that**
the first electrical machine (50) is suitable for propelling the vehicle, and **in that**
said drive shaft (40) is connected to said first rotor (65) via said second clutch (105).

2. Powertrain (10) according to Claim 1,
**characterized in that** the powertrain (10) further comprises a third clutch (110) and **in that** said second rotor (85) is connected to said first reducing gear (150) via said third clutch (110).

3. Powertrain (10) according to any one of the preceding claims, **characterized in that** the powertrain (10) further comprises a fourth clutch (112) and **in that** the first reducing gear (150) is connected to the first transmission shaft (120) via said fourth clutch (112).

4. Powertrain (10) according to any one of the preceding claims, **characterized in that** the powertrain (10) further comprises:
- a third electrical machine (170) suitable for propelling the vehicle and comprising a third stator (180) and a third rotor (185), the third stator (180) being fixed relative to the combustion engine (30);
- a second reducing gear (160);
- a second transmission shaft (125) suitable for driving at least one second wheel (135) of the vehicle via a second differential (145);
and **in that**
- said third rotor (185) is connected to said second transmission shaft (125) via said second reducing gear (160);
- said second reducing gear (160) is positioned in such a way that it is suitable for imposing a speed of rotation of the third rotor (185) which is greater than the speed of rotation of the second transmission shaft (125).

5. Powertrain (10) according to Claim 4, **characterized in that** the powertrain (10) comprises a fifth clutch (115) and **in that** said third rotor (185) is connected to said second reducing gear (160) via said fifth clutch (115).

6. Powertrain (10) according to Claim 4 or 5, **characterized in that** the powertrain (10) comprises a sixth clutch (117) and **in that** said second reducing gear (160) is connected to said second transmission shaft (125) via said sixth clutch (117).

7. Powertrain (10) according to any one of the preceding claims, **characterized in that** the powertrain (10) comprises a fourth electrical machine (210) comprising a fourth stator (220) and a fourth rotor (225), **in that** said fourth electrical machine (210) is connected to said first transmission shaft (120) via said first reducing gear (150) and **in that** said first reducing gear (150) is positioned in such a way that it is suitable for imposing a speed of rotation of the fourth rotor (225) which is greater than the speed of rotation of said first transmission shaft (120).

8. Hybrid powertrain (10) of series-parallel combined type for propelling a vehicle and comprising:
- a combustion engine (30) suitable for propelling the vehicle, said combustion engine (30) comprising a drive shaft (40);
- a first electrical machine (50) suitable for generating electrical energy, said first electrical machine (50) comprising a first stator (60) and a first rotor (65), said first stator (60) being fixed relative to the combustion engine (30);
- a second electrical machine (70) suitable for propelling the vehicle and for generating electrical energy, said second electrical machine (70) comprising a second stator (80) and a second rotor (85), said second stator (80) being fixed relative to the combustion engine (30);
- a first clutch (100) comprising an input (101) and an output (102);
- a first transmission shaft (120) suitable for driving at least one first wheel (130) of the vehicle via a first differential (140);
- a second transmission shaft (125) suitable for driving at least one second wheel (135) of the vehicle via a second differential (145);
- a reducing gear (190);
in which:
- the first electrical machine (50) is suitable for supplying electrical energy to the second electrical machine (70) to propel the vehicle;
- said drive shaft (40) is connected to said first rotor (65) with a 1/1 transmission ratio;
- said first rotor (65) is permanently connected to said input (101) of said first clutch (100) with a 1/1 transmission ratio;
- said output (102) of said first clutch (100) is connected to said first transmission shaft (120) with a 1/1 transmission ratio;
- the second rotor (85) is connected to said second transmission shaft (125) via said reducing gear (190);
- said reducing gear (190) is positioned in such a way that it is suitable for imposing a speed of rotation of the second rotor (85) which is greater than the speed of rotation of the second transmission shaft (125);
**characterized in that**
the powertrain (10) further comprises a second clutch (105), and **in that**
said drive shaft (40) is connected to said first rotor (65) via said second clutch (105).

9. Powertrain (10) according to Claim 8, **characterized in that** the powertrain (10) further comprises a third clutch (110) and **in that** said second rotor (85) is connected to said reducing gear (190) via said third clutch (110).

10. Powertrain (10) according to either one of Claims 8 and 9, **characterized in that** the powertrain (10) further comprises a fourth clutch (112) and **in that** said reducing gear (190) is connected to said second transmission shaft (125) via said fourth clutch (112).

11. Powertrain (10) according to any one of Claims 8 to 10, **characterized in that** the powertrain (10) comprises a fourth electrical machine (210) comprising a fourth stator (220) and a fourth rotor (225), **in that** said fourth electrical machine (210) is connected to said second transmission shaft (125) via said reducing gear (190) and **in that** said reducing gear (190) is positioned in such a way that it is suitable for imposing a speed of rotation of the fourth rotor (225) which is greater than the speed of rotation of said second transmission shaft (125).

12. Vehicle comprising a powertrain (10) according to any one of the preceding claims.
